# EUROPEAN PATENT APPLICATION

(11) **EP 4 411 971 A1**
(43) Date of publication of application: **07.08.2024**
(21) Application number: 22872514.9
(22) Date of filing: 30.06.2022
(51) Int. Cl.: H01M 50/536, H01M 10/04, H01M 10/052, H01M 10/0587, H01M 50/538

(54) **CYLINDRICAL BATTERY**

(30) Priority: 27.09.2021 JP 2021156406
(71) Applicant: Panasonic Intellectual Property Management Co., Ltd., Osaka-shi, Osaka 540-6207 (JP)
(72) Inventor: YAGI, Haruhisa, Kadoma-shi, Osaka 571-0057 (JP); MORIYAMA, Yusuke, Kadoma-shi, Osaka 571-0057 (JP); SHINOBU, Tomoaki, Kadoma-shi, Osaka 571-0057 (JP); HIROSE, Takayuki, Kadoma-shi, Osaka 571-0057 (JP)
(74) Representative: Novagraaf International SA
(86) International application number: PCT/JP2022/026390
(87) International publication number: WO 2023/047757

(57) **Abstract**

In a winding electrode group 2 a separator and an electrode plate are stacked and wound. A first current collector plate 20 includes a ring member 80 and a partial ring member 82. The partial ring member 82 is joined, in a first welded part (embodiment) 84, to each of a plurality of first electrode core members 12 arranged in a radial direction of the electrode group 2. Of a plurality of first welded parts (embodiment) 84, two first welded parts (embodiment) adjacent in the radial direction are disposed at positions shifted in a winding direction intersecting the radial direction.

## Description

### TECHNICAL FIELD

The present disclosure relates to a cylindrical battery including an electrode group and a current collector plate.

### BACKGROUND ART

A secondary battery such as a lithium-ion battery is inserted into a bottomed cylindrical case body, and the opening of the case body is blocked by a lid. In addition, the part where the upper edge of the case body and the upper edge of the lid overlap is welded. In such a secondary battery, the welded part is inspected by non-destructive inspection to confirm whether there is a leakage of gas or electrolyte from inside the case. In this process, the welded part is irradiated with an X-ray passing a corner of the upper end of the lid and inclined outward with respect to the side edge of the lid (see, for example, PATENT LITERATURE 1).

### RELATED-ART LITERATURE

### PATENT LITERATURE

PATENT LITERATURE 1: JP2019-8977

### SUMMARY OF INVENTION

### TECHNICAL PROBLEM

When an X-ray is radially radiated from a light source, a distortion occurs in an X-ray image even if a plurality of welded parts are arranged linearly because the angles of incidence of X ray with respect to the respective welded parts differ.

The present disclosure addresses the issue described above, and a purpose thereof is to provide a technology for improving accuracy of welding inspection.

### SOLUTION TO PROBLEM

A cylindrical battery according to an embodiment of the present disclosure includes: a winding electrode group formed by stacking and winding a separator and an electrode plate; and a current collector plate joined, in a welded part, to each of a plurality of ends of electrode plates arranged in a radial direction of the electrode group. Of a plurality of welded parts, two welded parts adjacent in the radial direction are disposed at positions shifted in a winding direction intersecting the radial direction.

### ADVANTAGEOUS EFFECTS OF INVENTION

According to the present disclosure, accuracy of welding inspection is improved.

### BRIEF DESCRIPTION OF DRAWINGS

[FIG. 1] FIGS. 1A-1B show a structure of the cylindrical battery according to the embodiment.
[FIG. 2] FIGS. 2A-2B show a structure of the first construct including the first current collector plate and the electrode group of FIG. 1A.
[FIG. 3] FIGS. 3A-3B show an overview of X-ray inspection of the first construct of FIG. 2A-2B.
[FIG. 4] FIGS. 4A-4B show a force applied to the first construct of FIG. 2A-2B during charging and discharging.
[FIG. 5] FIGS. 5A-5B show a structure of the second construct including the first current collector plate and the electrode group of FIG. 1A.
[FIG. 6] FIGS. 6A-6B show an overview of X-ray inspection of the second construct of FIG. 5A-5B.
[FIG. 7] FIGS. 7A-7B show a force applied to the second construct of FIG. 5A-5B during charging and discharging.

### DESCRIPTION OF EMBODIMENTS

Hereinafter, the present disclosure will be described based on preferred embodiments with reference to drawings. The embodiments do not limit the scope of the present disclosure but exemplify the disclosure. Not all of the features and the combinations thereof described in the embodiments are necessarily essential to the present disclosure. Identical or like constituting elements, members, processes shown in the drawings are represented by identical symbols and a duplicate description will be omitted as appropriate. The scales and shapes shown in the figures are defined for convenience's sake to make the explanation easy and shall not be interpreted limitatively unless otherwise specified. Terms like "first", "second", etc. used in the specification and claims do not indicate an order or importance by any means unless otherwise specified and are used to distinguish a certain feature from the others. Those of the members that are not material to the description of the embodiments are omitted in the drawings.

Hereinafter, the structure of a cylindrical battery 1 according to this embodiment will be described by comparing it with a comparative structure. (1) The structure common to the embodiment and the comparative example, (2) the structure of the comparative example, and (3) the structure of the embodiment will be described in the stated order.

### (1) The structure common to the embodiment and the comparative example

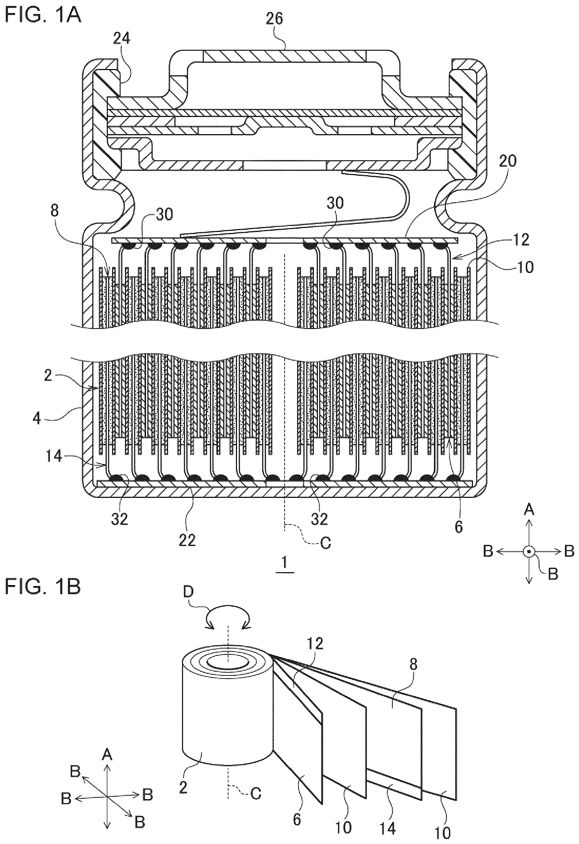

FIGS. 1A-1B show a structure of the cylindrical battery 1. FIG. 1A is a cross-sectional view of the cylindrical battery 1, and FIG. 1B is an exploded perspective view of an electrode group 2. The cylindrical battery 1 is, for example, a rechargeable secondary battery such as a lithium ion battery, a nickel-metal hydride battery, and a nickelcadmium battery. The cylindrical battery 1 by way of one example has a structure in which the electrode group 2 is stored in an outer can 4 along with an electrolytic solution (not shown). The electrode group 2 is cylindrical in shape by way of one example and, as shown in FIG. 1B, has a winding structure in which a belt-like first electrode plate 6 and a belt-like second electrode plate 8 are stacked, sandwiching a belt-like separator 10, and are wound in a spiral shape. In this embodiment, the first electrode plate 6 is the positive electrode plate and the second electrode plate 8 is the negative electrode plate, but the polarity of the first electrode plate 6 and the second electrode plate 8 may be reversed. The separator 10 is formed by a microporous film made of, by way of one example, a polypropylene resin or the like.

The first electrode plate 6 and the second electrode plate 8 have a structure in which an electrode active material layer is stacked on a current collector. In the case of a general lithium ion secondary battery, the current collector is comprised of an aluminum foil or the like when it is a positive electrode and is comprised of a copper foil or the like when it is a negative electrode. The electrode active material layer can be formed by applying an electrode mixture material to the surface of the current collector by a known coating apparatus and drying and rolling the material. The electrode mixture material is obtained by kneading materials including an electrode active material, a binder, a conductive material, etc. in a dispersion medium and uniformly dispersing the materials. In the case of a general lithium ion secondary battery, the electrode active material is lithium cobalt oxide, lithium iron phosphate, or the like when it is a positive electrode and is graphite or the like when it is a negative electrode.

The first electrode plate 6 has a first electrode core member 12 that is not coated with an electrode mixture material at the end on one side in the width direction A (a direction that intersects the longitudinal direction of the belt). Hereinafter, the width direction A is also referred to as "vertical direction". Further, denoting the side of the first electrode plate 6 on which the first electrode core member 12 is disposed by the "upper side", the side of the first electrode plate 6 on which the first electrode core member 12 is not disposed is called the "lower side". The first electrode core member 12 is an exposed portion of the current collector of the first electrode plate 6 in which the electrode active material layer is not stacked. Further, the second electrode plate 8 has a second electrode core member 14 not coated with an electrode mixture material on the other side in the width direction A, i.e., at the end opposite to the side where the first electrode core member 12 protrudes. It can be said that the second electrode core member 14 is disposed on the lower side of the second electrode plate 8. The second electrode core member 14 is an exposed portion of the current collector of the second electrode plate 8 in which the electrode active material layer is not stacked.

As described above, the electrode group 2 has a structure in which the first electrode plate 6 and the second electrode plate 8 are wound. For this reason, a plurality of ends of the first electrode plate 6 and the second electrode plate 8 in the width direction A are arranged in the radial direction B of the electrode group 2. Therefore, the electrode group 2 includes a plurality of first electrode core members 12 arranged in the radial direction B and a plurality of second electrode core members 14 arranged in the radial direction B.

In the electrode group 2, the ends (the first electrode core member 12) of a plurality of first electrode plates 6 arranged in the radial direction B are bent in the radial direction B. For example, each first electrode core member 12 is bent toward the central axis C of the winding of the electrode group 2, i.e., bent inward in the radial direction B. The central axis C of the winding is, for example, the geometric center of the outline of the electrode group 2 seen in the width direction A, i.e., the geometric center of the outline of the shape of the electrode group 2 projected in the width direction A. Further, in the electrode group 2, the ends (the second electrode core member 14) of a plurality of second electrode plates 8 arranged in the radial direction B are bent in the radial direction B. For example, each second electrode core member 14 is bent toward the central axis C of the winding.

A first current collector plate 20 is provided on the side in the electrode group 2 where the first electrode core member 12 protrudes, i.e., toward the upper side of the electrode group 2. The first current collector plate 20 is made of, for example, aluminum or the like. The first electrode core member 12 of the plurality of first electrode plates 6 bent on the upper side are placed in surface contact with the first current collector plate 20. By bending the first electrode core member 12 of each first electrode plate 6, the contact area between each first electrode core member 12 and the first current collector plate 20 increases. Laser welding, etc. of the first current collector plate 20 and the first electrode core member 12 forms a first welded part 30. Thereby, the first electrode plate 6 of each winding layer and the first current collector plate 20 are joined to each other in the first welded part 30.

A second current collector plate 22 is provided on the side in the electrode group 2 where the second electrode core member 14 protrudes, i.e., on the lower side of the electrode group 2. The second current collector plate 22 is made of, for example, copper, nickel, nickel-plated copper, nickel-plated iron, and the like. The second electrode core member 14 of the plurality of second electrode plates 8 bent on the lower side are in surface contact with the second current collector plate 22. By bending the second electrode core member 14 of each second electrode plate 8, the contact area between each second electrode core member 14 and the second current collector plate 22 increases. Laser welding, etc. of the second current collector plate 22 with the second electrode core member 14 forms a second welded part 32. Thereby, the second electrode plate 8 of each winding layer and the second current collector plate 22 are joined to each other in the second welded part 32.

The electrode group 2 to which the first current collector plate 20 and the second current collector plate 22 are joined is stored in the bottomed cylindrical outer can 4 along with the electrolytic solution. The outer can 4 is made of, for example, copper, nickel, iron, an alloy thereof, or the like. The second current collector plate 22 is joined to the inner bottom surface of the outer can 4 by welding or the like. The first current collector plate 20 is joined to a sealing plate 26 made of the same metal as the outer can 4 by welding or the like. The sealing plate 26 is fitted into the opening of the outer can 4 via an insulating gasket 24. Thereby, the electrode group 2 and the electrolytic solution are sealed in the outer can 4.

The first current collector plate 20, the second current collector plate 22, the first welded part 30, and the second welded part 32 differ between the comparative example and the embodiment, and the rest of the structure of the cylindrical battery 1 is the same. In the following, therefore, the combination of the first current collector plate 20, the electrode group 2, and the second current collector plate 22 in the comparative example is referred to as "a first construct 40", and the combination of the first current collector plate 20, the electrode group 2, and the second current collector plate 22 in the embodiment is referred to as "a second construct 70" for clarity of the description.

Further, the structure of the first welded part 30 for joining the first electrode core member 12 and the first current collector plate 20 and the structure of the second welded part 32 for joining the second electrode core member 14 and the second current collector plate 22 are the same. In the following, therefore, the structure of the first welded part 30 will be mainly described, and a description of the structure of the second welded part 32 will be omitted.

### (2) Structure of the comparative example

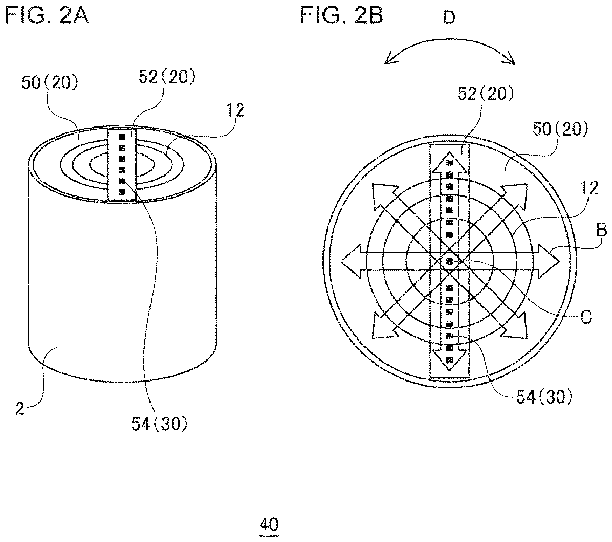

FIGS. 2A-2B show a structure of the first construct 40 including the first current collector plate 20 and the electrode group 2. FIG. 2A is a perspective view of the first construct 40, and FIG. 2B is a top view of the first construct 40. Since the electrode group 2 has a cylindrical shape as described above, the upper surface of the electrode group 2 has a circular shape. Further, the wound first electrode core member 12 is exposed on the upper surface of the electrode group 2. The first current collector plate 20 includes an annular ring member 50 that covers the outer peripheral portion of the upper surface of the electrode group 2 and a rectangular straight member 52 that straddles the inner edges of the ring member 50. For example, the straight member 52 covers the central axis C of the winding of the electrode group 2. The ring member 50 and the straight member 52 may be connected or may be integrally formed. Laser welding with the first electrode core member 12 is performed in the straight member 52. That is, a plurality of first welded parts (comparative example) 54 arranged in a row are formed in the straight member 52, and the straight member 52 and the first electrode core member 12 are joined in each first welded part (comparative example) 54.

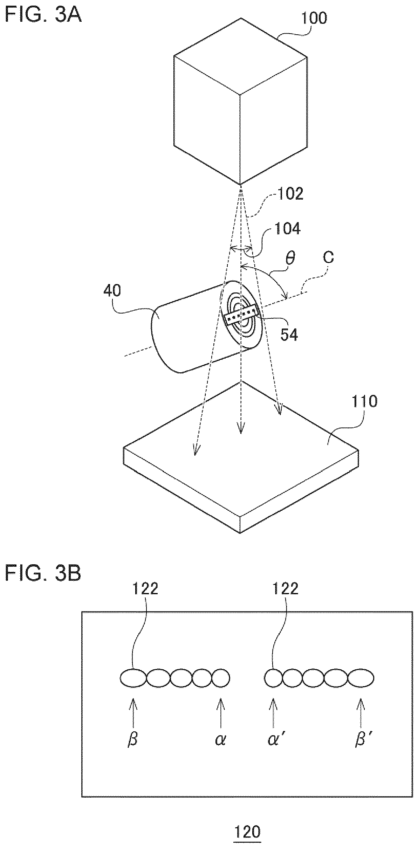

FIGS. 3A-3B show an overview of X-ray inspection of the first construct 40. FIG. 3A shows an apparatus for X-ray inspection. X-ray inspection is performed in the cylindrical battery 1. In this case, only the first construct 40 of the cylindrical battery 1 is shown for clarity of description. For X-ray inspection, an X-ray source 100 and a detector 110 arranged opposite to each other across the first construct 40 are used. The X-ray source 100 radiates an X-ray 102 radially toward the detector 110. The direction in which the X-ray 102 is radiated is the irradiation direction.

The first construct 40 is arranged such that the central axis C of the winding is inclined by an angle θ with respect to the irradiation direction of the X-ray 102. An irradiation angle range 104 of the X-ray 102 is set to include a plurality of first welded parts (comparative example) 54 to be imaged, and the X-ray 102 radiated from the X-ray source 100 is radiated toward a plurality of first welded parts (comparative example) 54 of the first construct 40. The radiated X-ray 102 is obstructed by at least a plurality of first welded parts (comparative example) 54. The detector 110 detects the X-ray 102 transmitted through the first construct 40. From the X-ray 102 detected by the detector 110, an X-ray image of a plurality of first welded parts (comparative example) 54 in the first construct 40 and the vicinity thereof (hereinafter referred to as "a first X-ray image") is acquired.

FIG. 3B shows a first X-ray image 120. The first X-ray image 120 shows a plurality of first welded part (comparative example) portions 122 corresponding to the plurality of first welded parts (comparative example) 54. Like the plurality of first welded parts (comparative example) 54, the plurality of first welded part (comparative example) portions 122 are arranged in a row.

As described above, the X-ray 102 from the X-ray source 100 is radially irradiated, spreading in the irradiation angle range 104. Therefore, the angle of incidence of the X-ray 102 on the first welded part (comparative example) 54 disposed at the center of the plurality of first welded parts (comparative example) 54 (hereinafter referred to as "a first angle of incidence") and the angle of incidence of the X-ray 102 on the first welded part (comparative example) 54 disposed at the end of the plurality of first welded parts (comparative example) 54 (hereinafter referred to as "a second angle of incidence") are different. To describe it specifically, the first angle of incidence is smaller than the second angle of incidence. This corresponds to the X-ray 102 being incident on the first welded part (comparative example) 54 disposed at the end more diagonally than on the first welded part (comparative example) 54 disposed at the center. Further, the distance between the first welded part (comparative example) 54 disposed at the center of the plurality of first welded parts (comparative example) 54 and the X-ray source 100 (hereinafter referred to as "a first distance") and the distance between the first welded part (comparative example) 54 disposed at the end of the plurality of first welded parts (comparative example) 54 and the X-ray source 100 (hereinafter referred to as "a second distance") are different. To describe it specifically, the first distance is smaller than the second distance.

Due to such an X-ray inspection environment, the shape of the plurality of first welded part (comparative example) portions 122 in the first X-ray image 120 differs between the center and the end. For example, the first welded part (comparative example) portion 122 close to the center α(α') has a shape close to a circle. On the other hand, the first welded part (comparative example) portion 122 close to the end β(β') has a shape close to an ellipse that is longer in the horizontal direction than in the longitudinal direction. That is, in the first X-ray image 120, a distortion occurs in the direction in which the plurality of first welded part (comparative example) portions 122 are arranged.

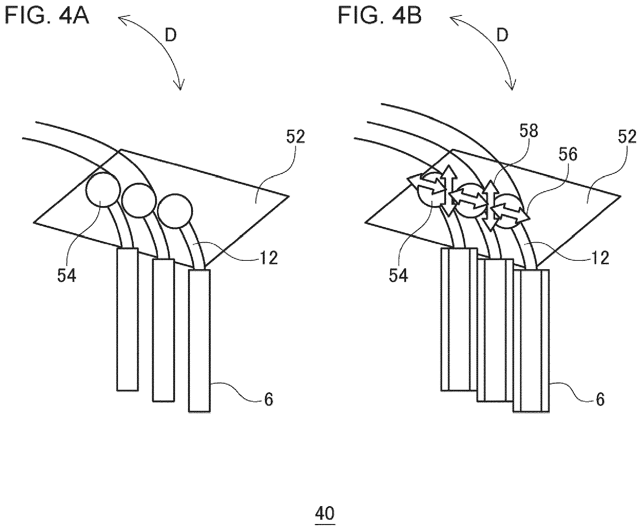

FIGS. 4A-4B show a force applied to the first construct 40 during charging and discharging. These are partial perspective views showing the first electrode plate 6, the first electrode core member 12, the straight member 52, and the first welded part (comparative example) 54 of the first construct 40 on an enlarged scale. FIG. 4A shows a structure at the time of discharge. As described above, the plurality of first welded parts (comparative example) 54 are arranged in a row, and the straight member 52 and the first electrode core member 12 are joined in each first welded part (comparative example) 54.

FIG. 4B shows a structure at the time of charging. Each of the plurality of first electrode plates 6 expands during charging in the direction in which the plurality of first electrode plates 6 are arranged. This corresponds to the first electrode plate 6 expanding in the direction toward the adjacent, further first electrode plate 6, i.e., in the radial direction B of FIG. 2B. The expansion of the first electrode plate 6 is applied as an expansion force 56 in the radial direction B to each welded part (comparative example) 54. Further, the first welded parts (comparative example) 54 are arranged in the radial direction B. Since the direction in which the first welded parts (comparative example) 54 are arranged matches the direction of the expansion force 56 applied to the first welded parts (comparative example) 54, a vertical force 58 oriented in the vertical direction is applied to the first welded parts (comparative example) 54. By repeating discharging and charging, the states of FIGS. 4A and 4B are repeated. As a result, there is a possibility that the first welded part (comparative example) 54 breaks due to repetition of state in which the vertical force 58 is applied to the first welded part (comparative example) 54 and the state in which it is not applied.

### (3) Structure of this embodiment

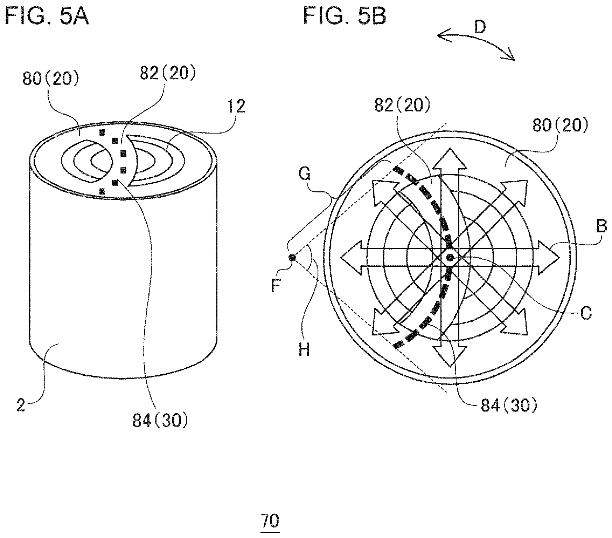

FIGS. 5A-5B show a structure of the second construct 70 including the first current collector plate 20 and the electrode group 2. FIG. 5A is a perspective view of the second construct 70, FIG. 5B is a top view of the second construct 70, and FIGS. 5A-5B are shown as corresponding to FIGS. 2A-2B. The electrode group 2 in FIG. 5A has the same structure as the electrode group 2 in FIG. 2A. The first current collector plate 20 includes an annular ring member 80 that covers the outer peripheral portion of the upper surface of the electrode group 2 and a partially annular partial ring member 82 that straddles the inner edges of the ring member 50. The partial ring member 82 has a shape that includes an arc defined by a radius G from a central point F outside the ring member 80 and a central angle H. The central angle H is configured to be, for example, between 20 degrees and 25 degrees. The ring member 80 and the partial ring member 82 may be connected or may be integrally formed. Laser welding with the first electrode core member 12 is performed in the partial ring member 82. That is, a plurality of first welded parts (embodiment) 84 arranged along the arc are formed in the partial ring member 82, and the partial ring member 82 and the first electrode core member 12 are joined in each first welded part (embodiment) 84.

Defining, as shown in FIG. 1B, a winding direction D intersecting the radial direction B and rotating about the central axis C of the winding, it can be said that two first welded parts (embodiment) 84, of the plurality of first welded parts (the present embodiment) 84, adjacent in the radial direction B are disposed at positions shifted in the winding direction D. Further, of the plurality of first welded parts (embodiment) 84, the first welded part (embodiment) 84 joined to the first electrode core member 12 on the innermost circumference, and the first welded part (embodiment) 84 joined to the first electrode core member 12 on the outermost circumference are also disposed at positions shifted in the winding direction D.

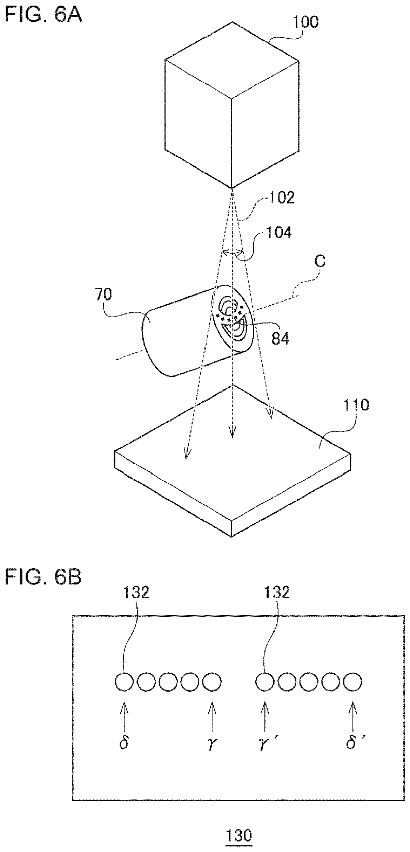

FIGS. 6A-6B show an overview of X-ray inspection of the second construct 70. FIG. 6A shows an apparatus for X-ray inspection. X-ray inspection is performed in the cylindrical battery 1. In this case, too, only the second construct 70 of the cylindrical battery 1 is shown for clarity of description. The X-ray source 100, the X-ray 102, the irradiation angle range 104, and the detector 110 are as shown in FIG. 3A. The second construct 70 is arranged such that the central axis C of the winding is inclined by an angle θ with respect to the irradiation direction of the X-ray 102. The irradiation angle range 104 of the X-ray 102 is set to include a plurality of first welded parts (embodiment) 84 to be imaged, and the X-ray 102 radiated from the X-ray source 100 is radiated toward a plurality of first welded parts (embodiment) 84 of the second construct 70.

The radiated X-ray 102 is obstructed by at least a plurality of first welded parts (embodiment) 84. The direction connecting two first welded parts (embodiment) 84 adjacent in the radial direction B is designed to be perpendicular to the irradiation direction of the X-ray 102 in the irradiation angle range 104 of the X-ray. It can be said that the direction connecting the first welded part (embodiment) 84 joined to the first electrode core member 12 on the innermost circumference and the first welded part (embodiment) 84 joined to the first electrode core member 12 on the outermost circumference is designed to be perpendicular to the irradiation direction of the X-ray 102 in the irradiation angle range 104 of the X-ray. Therefore, X-ray 102 is incident on the first welded parts (embodiment) 84 at the same angle. The detector 110 detects the X-ray 102 transmitted through the second construct 70. From the X-ray 102 detected by the detector 110, an X-ray image of a plurality of first welded parts (embodiment) 84 in the second construct 70 and the vicinity thereof (hereinafter referred to as "a second X-ray image") is acquired.

FIG. 6B shows a second X-ray image 130. The second X-ray image 130 shows a plurality of first welded part (embodiment)portions 132 corresponding to the plurality of first welded parts (embodiment) 84. The plurality of first welded part (embodiment) portions 132 are arranged in a row. As described above, X-ray 102 from the X-ray source 100 is incident on the first welded parts (embodiment) 84 at the same angle. Further, the distance from the X-ray source 100 to each first welded part (embodiment) 84 is identical. Due to such an X-ray inspection environment, the shape of the plurality of first welded part (embodiment) portions 132 in the second X-ray image 130 is identical at the center and at the end. For example, the first welded part (embodiment) portion 132 close to the center γ(γ') has a shape close to a circle. The first welded part (embodiment) portion 132 close to the end δ(δ') also has a shape close to a circle. That is, a distortion in the plurality of first welded part (embodiment) portions 132 in the second X-ray image 130 is small.

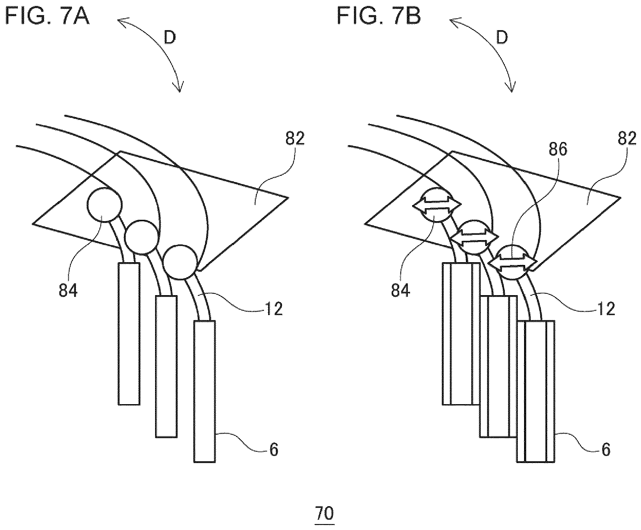

FIGS. 7A-7B show a force applied to the second construct 70 during charging and discharging. These are partial perspective views showing the first electrode plate 6, the first electrode core member 12, the partial ring member 82, and the first welded part (embodiment) 8 4 of the second construct 70 on an enlarged scale. FIG. 6A shows a structure at the time of discharge. As described above, the plurality of first welded parts (embodiment) 84 are arranged at positions shifted in the winding direction D, and the partial ring member 82 and the first electrode core member 12 are joined in each first welded part (embodiment) 84.

FIG. 7B shows a structure at the time of charging. Each of the plurality of first electrode plates 6 expands during charging in the direction in which the plurality of first electrode plates 6 are arranged. This is also true in FIG. 4B, and the first electrode plate 6 expands in the radial direction B of FIG. 2B. The expansion of the first electrode plate 6 is applied as an expansion force 56 in the radial direction B to each welded part (embodiment) 84. However, the first welded parts (embodiment) 84 are not arranged in the radial direction B. Since the direction in which the first welded parts (embodiment) 84 are arranged does not match the direction of the expansion force 56 applied to the first welded parts (embodiment) 84, a vertical force oriented in the vertical direction is not produced in the first welded part (embodiment) 84. Therefore, the possibility that the first welded part (embodiment) 84 breaks is reduced.

According to the embodiment, two first welded parts (embodiment) 84 adjacent in the radial direction B are disposed at positions displaced in the winding direction D. It is therefore possible to ensure that the angle of incidence of the X-ray 102 in each first welded part (embodiment) 84 matches each other. Further, since the angle of incidence of the X-ray 102 in each first welded part (embodiment) 84 matches each other, impact of distortion in an X-ray image is reduced. Further, since two first welded parts (embodiment) 84 adjacent in the radial direction B are disposed at positions shifted in the winding direction D, interference between the expansion forces 86 applied to respective first welded parts (embodiment) 84 is suppressed. Further, since interference between the expansion forces 86 is suppressed, the first welded part (embodiment) 84 is inhibited from being broken.

Further, since impact of distortion in an X-ray image is reduced, accuracy of welding inspection is improved. Further, the first welded part (embodiment) 84 joined to the first electrode core member 12 on the innermost circumference and the first welded part (embodiment) 84 joined to the first electrode core member 12 on the outermost circumference are disposed at positions shifted in the winding direction D. It is therefore ensured that the angle of incidence of the X-ray 102 in each first welded part (embodiment) 84 matches each other. Further, since impact of distortion in an X-ray image is reduced, accuracy of welding inspection is improved. Further, the first welded part (embodiment) 84 joined to the first electrode core member 12 on the innermost circumference and the first welded part (embodiment) 84 joined to the first electrode core member 12 on the outermost circumference are disposed at positions shifted in the winding direction D. Therefore, interference between the expansion forces 86 applied to respective first welded parts (embodiment) 84 is suppressed.

Further, the direction connecting two first welded parts (embodiment) 84 adjacent in the radial direction B is perpendicular to the irradiation direction of the X-ray 102 in the irradiation angle range of the X-ray. It is therefore ensured that the angle of incidence of the X-ray 102 in each first welded part (embodiment) 84 matches each other. Further, the direction connecting the first welded part (embodiment) 84 joined to the first electrode core member 12 on the innermost circumference and the first welded part (embodiment) 84 joined to the first electrode core member 12 on the outermost circumference is perpendicular to the irradiation direction of the X-ray 102 in the irradiation angle range 104 of the X-ray. It is therefore ensured that the angle of incidence of the X-ray 102 in each first welded part (embodiment) 84 matches each other. Further, the plurality of first welded parts (embodiment) 84 arranged along an arc. It is therefore ensured that the angle of incidence of the X-ray 102 in each first welded part (embodiment) 84 matches each other. Further, the plurality of first welded parts (embodiment) 84 arranged along an arc so that interference between the expansion forces 86 applied to respective first welded parts (embodiment) 84 is suppressed.

The embodiments of the present disclosure are described above in detail. The embodiments described above are merely specific examples of practicing the present disclosure. The details of the embodiments shall not be construed as limiting the technical scope of the present disclosure. A number of design modifications such as modification, addition, deletion, etc. of constituting elements may be made to the extent that they do not depart from the idea of the present disclosure defined by the claims. New embodiments with design modifications will provide the combined advantages of the embodiment and the variation. Although the details subject to such design modification are emphasized in the embodiment described above by using phrases such as "of this embodiment" and "in this embodiment", details not referred to as such are also subject to design modification. Any combination of constituting elements included in the respective embodiments is also useful as an embodiment of the present disclosure. Hatching in the cross section in the drawings should not be construed as limiting the material of the hatched object.

The embodiments may be defined by the following items.

### [ITEM 1]

A cylindrical battery (1) including:
a winding electrode group (2) formed by stacking and winding a separator (10) and an electrode plate (6); and
a current collector plate (80, 82) joined, in a welded part (84), to each of a plurality of ends (12) of electrode plates (6) arranged in a radial direction of the electrode group (2),
wherein, of a plurality of welded parts (84), two welded parts (84) adjacent in the radial direction are disposed at positions shifted in a winding direction intersecting the radial direction.

### [ITEM 2]

The cylindrical battery (1) according to ITEM 1, wherein, of the plurality of welded parts (84), the welded part (84) joined to the end (12) on the innermost circumference and the welded part (84) joined to the end (12) on the outermost circumference are disposed at positions shifted in the winding direction.

### [ITEM 3]

The cylindrical battery (1) according to ITEM 1,
wherein the cylindrical battery (1) is disposed for X-ray inspection such that a central axis of winding of the electrode group (2) is inclined with respect an irradiation direction of X-ray, and
wherein a direction connecting two welded parts (84) adjacent in the radial direction is perpendicular to the irradiation angle of X-ray in an irradiation angle range of X-ray.

### [ITEM 4]

The cylindrical battery according to ITEM 2,
wherein the cylindrical battery (1) is disposed for X-ray inspection such that a central axis of winding of the electrode group (2) is inclined with respect an irradiation direction of X-ray, and
a direction connecting the welded part (84) joined to the end (12) on the innermost circumference and the welded part (84) joined to the end (12) on the outermost circumference is perpendicular to the irradiation angle of X-ray in an irradiation angle range of X-ray.

### [ITEM 5]

The cylindrical battery (1) according to any one of ITEMS 1 through 4,
wherein the plurality of welded parts (84) are arranged along an arc.

### INDUSTRIAL APPLICABILITY

According to the present disclosure, accuracy of welding inspection is improved.

### REFERENCE SIGNS LIST

1 cylindrical battery, 2 electrode group, 4 outer can, 6 first electrode plate, 8 second electrode plate, 10 separator, 12 first electrode core member, 14 second electrode core member, 20 first current collector plate, 22 second current collector plate, 24 insulating gasket, 26 sealing plate, 30 first welded part, 32 second welded part, 40 first construct, 50 ring member, 52 straight member, 54 first welded part (comparative example), 56 expansion force, 58 vertical force, 70 second construct, 80 ring member, 82 partial ring member, 84 first welded part (embodiment), 86 expansion force, 100 X-ray source, 102 X-ray, 104 irradiation angle range, 110 detector, 120 first X-ray image, 122 first welded part (comparative example) portion, 130 second X-ray image, 132 first welded part (embodiment) portion

## Claims

1. A cylindrical battery comprising:
a winding electrode group formed by stacking and winding a separator and an electrode plate; and
a current collector plate joined, in a welded part, to each of a plurality of ends of electrode plates arranged in a radial direction of the electrode group,
wherein, of a plurality of welded parts, two welded parts adjacent in the radial direction are disposed at positions shifted in a winding direction intersecting the radial direction.

2. The cylindrical battery according to CLAIM 1,
wherein, of the plurality of welded parts, the welded part joined to the end on the innermost circumference and the welded part joined to the end on the outermost circumference are disposed at positions shifted in the winding direction.

3. The cylindrical battery according to CLAIM 1,
wherein the cylindrical battery is disposed for X-ray inspection such that a central axis of winding of the electrode group is inclined with respect an irradiation direction of X-ray, and
wherein a direction connecting two welded parts adjacent in the radial direction is perpendicular to the irradiation angle of X-ray in an irradiation angle range of X-ray.

4. The cylindrical battery according to CLAIM 2,
wherein the cylindrical battery is disposed for X-ray inspection such that a central axis of winding of the electrode group is inclined with respect an irradiation direction of X-ray, and
a direction connecting the welded part joined to the end on the innermost circumference and the welded part joined to the end on the outermost circumference is perpendicular to the irradiation angle of X-ray in an irradiation angle range of X-ray.

5. The cylindrical battery according to any one of CLAIMS 1 through 4,
wherein the plurality of welded parts are arranged along an arc.
